# EUROPEAN PATENT APPLICATION

(11) **EP 3 869 681 A1**
(43) Date of publication of application: **25.08.2021**
(21) Application number: 21156274.9
(22) Date of filing: 10.02.2021
(51) Int. Cl.: H02M 3/335, H02M 1/00

(54) **POWER SUPPLY DEVICE**

(30) Priority: 20.02.2020 JP 2020026959
(71) Applicant: Yazaki Corporation, Minato-ku Tokyo 108-8333 (JP)
(72) Inventor: KANDA, Keisuke, Susono-shi, Shizuoka 410-1194 (JP); ITO, Satoshi, Susono-shi, Shizuoka 410-1194 (JP); YOSHIMITSU, Shota, Susono-shi, Shizuoka 410-1194 (JP)
(74) Representative: Grünecker Patent- und Rechtsanwälte PartG mbB

(57) **Abstract**

In a power supply device (1), a primary winding (TR1) is connected to, out of drain-source terminals of FETs (Q3 and Q4) as the subject of soft switching control, a source terminal (s3) and a drain terminal (d4) where the potential of the drain-source terminals is adjusted. In a case where a current value detected by a current detection unit (50) is equal to or smaller than a reference current value defined in advance, a controller (60) allows the current flowing backward due to resonance of a coil (L) and a capacitor (C) of a smoothing circuit (40) to flow in a secondary winding (TR2) via a rectifier circuit (30).

## Description

### BACKGROUND OF THE INVENTION

### 1. Field of the Invention

The present invention relates to a power supply device.

### 2. Description of the Related Art

Conventionally, as a power supply device, for example, Japanese Patent Application Laid-open No. 2016-135003 discloses a DC/DC converter that transforms a voltage of a power supplied from a direct current power supply and supplies the power to a load part. The DC/DC converter includes: an inverter circuit that is controlled by soft switching and converts a direct current power supplied from a direct current power supply to an alternating current power; a transformer that transforms the alternating current power converted by the inverter circuit; a rectifier circuit that rectifies the alternating current power transformed by the transformer to the direct current power; a smoothing reactor that smoothens the direct current power rectified by the rectifier circuit; and a resonant reactor that is provided between the inverter circuit and the transformer. The DC/DC converter performs zero voltage switching (ZVS) by the energy accumulated in the resonant reactor by soft switching.

By the way, with the DC/DC converter disclosed in Japanese Patent Application Laid-open No. 2016-135003, when the power supplied to the load part from the direct current power supply is small, for example, sufficient energy is not accumulated in the resonant reactor so that zero voltage switching cannot be performed, which may cause switching loss.

### SUMMARY OF THE INVENTION

The present invention is designed in view of the aforementioned circumstances, and an object thereof is to provide a power supply device capable of suppressing switching loss.

To solve the problem and achieve the object, a power supply device according to one aspect of the present invention includes a direct current power supply that supplies a direct current power; a switching circuit that includes a plurality of semiconductor switching elements configured to convert the direct current power supplied from the direct current power supply to an alternating current power; a transformer that includes a primary winding and a secondary winding configured to transform the alternating current power converted by the switching circuit, the primary winding being connected to the switching circuit; a rectifier circuit that is connected to the secondary winding and rectifies the alternating current power transformed by the transformer to the direct current power; a smoothing circuit that includes a coil and a capacitor configured to smooth the direct current power rectified by the rectifier circuit; a current detection unit that detects a current of the direct current power smoothened by the smoothing circuit; and a controller that controls the switching circuit and the rectifier circuit based on a detection result of the current detection unit, and adjusts a potential difference between input/output terminals of the semiconductor switching elements to be equal to or smaller than a set potential difference defined in advance to perform soft switching control of switching the semiconductor switching elements from OFF to ON, wherein the primary winding is connected to, out of the input/output terminals of the semiconductor switching elements as a subject of the soft switching control, the terminals where a potential of the input/output terminals is adjusted, and in a case where the current value detected by the current detection unit is equal to or smaller than a reference current value defined in advance, the controller allows a current flowing backward due to resonance of the coil and the capacitor to flow in the secondary winding via the rectifier circuit and allows a current to flow in the primary winding by the current flowing in the secondary winding to adjust the potential difference between the input/output terminals of the semiconductor switching elements as the subject of the soft switching control to be equal to or smaller than the set potential difference so as to switch the semiconductor switching elements as the subject of the soft switching control from OFF to ON.

According to another aspect of the present invention, in the power supply device, it is preferable to further include an inductor that is connected to the primary winding, wherein in a case where the current value detected by the current detection unit exceeds the reference current value, the controller adjusts the potential difference between the input/output terminals of the semiconductor switching elements as the subject of the soft switching control to be equal to or smaller than the set potential difference by an effect of the inductor so as to switch the semiconductor switching elements as the subject of the switching control from OFF to ON.

According to still another aspect of the present invention, in the power supply device, it is preferable that the switching circuit includes, as the semiconductor switching elements, a first semiconductor switching element, a second semiconductor switching element, a third semiconductor switching element, and a fourth semiconductor switching element, a first source terminal of the first semiconductor switching element is connected to a second drain terminal of the second semiconductor switching element, a third source terminal of the third semiconductor switching element is connected to a fourth drain terminal of the fourth semiconductor switching element, a first drain terminal of the first semiconductor switching element is connected to a third drain terminal of the third semiconductor switching element, a second source terminal of the second semiconductor switching element is connected to a fourth source terminal of the fourth semiconductor switching element, a connection line connecting the first drain terminal and the third drain terminal is connected to a positive electrode of the direct current power supply, a connection line connecting the second source terminal and the fourth source terminal is connected to a negative electrode of the direct current power supply, a connection line connecting the first source terminal and the second drain terminal is connected to one end of the primary winding, and a connection line connecting the third source terminal and the fourth drain terminal is connected to the other end of the primary winding, and in a case where the current value detected by the current detection unit is equal to or smaller than the reference current value when switching OFF the third semiconductor switching element and switching ON the fourth semiconductor switching element as the subject of the soft switching control from a state where the first semiconductor switching element and the third semiconductor switching element are ON and the second semiconductor switching element and the fourth semiconductor switching element are OFF, the controller switches OFF the third semiconductor switching element, allows the current flowing backward due to resonance of the coil and the capacitor to flow in the secondary winding via the rectifier circuit and allows the current flowing in the secondary winding to flow in the primary winding to decrease a voltage of the fourth drain terminal of the fourth semiconductor switching element as the subject of the soft switching control, and adjusts a potential difference between the fourth drain terminal and the fourth source terminal to be equal to or smaller than the set potential difference so as to switch the fourth semiconductor switching element as the subject of the soft switching control from OFF to ON.

According to still another aspect of the present invention, in the power supply device, it is preferable that the switching circuit includes, as the semiconductor switching elements, a first semiconductor switching element, a second semiconductor switching element, a third semiconductor switching element, and a fourth semiconductor switching element, a first source terminal of the first semiconductor switching element is connected to a second drain terminal of the second semiconductor switching element is connected, a third source terminal of the third semiconductor switching element is connected to a fourth drain terminal of the fourth semiconductor switching element, a first drain terminal of the first semiconductor switching element is connected to a third drain terminal of the third semiconductor switching element, a second source terminal of the second semiconductor switching element is connected to a fourth source terminal of the fourth semiconductor switching element, a connection line connecting the first drain terminal and the third drain terminal is connected to a positive electrode of the direct current power supply, a connection line connecting the second source terminal and the fourth source terminal is connected to a negative electrode of the direct current power supply, a connection line connecting the first source terminal and the second drain terminal is connected to one end of the primary winding, a connection line connecting the third source terminal and the fourth drain terminal is connected to the other end of the primary winding, and in a case where the current value detected by the current detection unit is equal to or smaller than the reference current value when switching OFF the fourth semiconductor switching element and switching ON the third semiconductor switching element as the subject of the soft switching control from a state where the second semiconductor switching element and the fourth semiconductor switching element are ON and the first semiconductor switching element and the third semiconductor switching element are OFF, the controller switches OFF the fourth semiconductor switching element, allows the current flowing backward due to resonance of the coil and the capacitor to flow in the secondary winding via the rectifier circuit and allows the current flowing in the secondary winding to flow in the primary winding to increase a voltage of the third source terminal of the third semiconductor switching element as the subject of the soft switching control, and adjusts a potential difference between the third drain terminal and the third source terminal to be equal to or smaller than the set potential difference so as to switch the third semiconductor switching element as the subject of the soft switching control from OFF to ON.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a circuit diagram illustrating a configuration example of a power supply device according to a first embodiment;
FIG. 2 is a circuit diagram illustrating a first operation example of the power supply device according to the first embodiment;
FIG. 3 is a circuit diagram illustrating a second operation example of the power supply device according to the first embodiment;
FIG. 4 is a circuit diagram illustrating a third operation example of the power supply device according to the first embodiment;
FIG. 5 is a circuit diagram illustrating a fourth operation example of the power supply device according to the first embodiment;
FIG. 6 is a timing chart illustrating the first to fourth operation examples of the power supply device according to the first embodiment;
FIG. 7 is a circuit diagram illustrating a fifth operation example of the power supply device according to the first embodiment;
FIG. 8 is a circuit diagram illustrating a sixth operation example of the power supply device according to the first embodiment;
FIG. 9 is a circuit diagram illustrating a seventh operation example of the power supply device according to the first embodiment;
FIG. 10 is a circuit diagram illustrating an eighth operation example of the power supply device according to the first embodiment;
FIG. 11 is a timing chart illustrating the fifth to eighth operation examples of the power supply device according to the first embodiment;
FIG. 12 is a circuit diagram illustrating a first operation example of a power supply device according to a second embodiment;
FIG. 13 is a circuit diagram illustrating a second operation example of the power supply device according to the second embodiment;
FIG. 14 is a circuit diagram illustrating a third operation example of the power supply device according to the second embodiment;
FIG. 15 is a circuit diagram illustrating a fourth operation example of the power supply device according to the second embodiment;
FIG. 16 is a timing chart illustrating the first to fourth operation examples of the power supply device according to the second embodiment;
FIG. 17 is a circuit diagram illustrating a fifth operation example of the power supply device according to the second embodiment;
FIG. 18 is a circuit diagram illustrating a sixth operation example of the power supply device according to the second embodiment;
FIG. 19 is a circuit diagram illustrating a seventh operation example of the power supply device according to the second embodiment;
FIG. 20 is a circuit diagram illustrating an eighth operation example of the power supply device according to the second embodiment; and
FIG. 21 is a timing chart illustrating the fifth to eighth operation examples of the power supply device according to the second embodiment.

### DETAILED DESCRIPTION OF THE PREFERRED EMBODIMENTS

Modes for embodying the present invention (embodiments) will be described in detail with reference to the accompanying drawings. The present invention is not limited by the content described in the following embodiments. Furthermore, structural elements described in the followings include elements that easily occurred to those skilled in the art and elements that are substantially the same. Moreover, the configurations described in the followings can be combined as appropriate. Furthermore, various kinds of omissions, substitutions, or changes of the configurations are possible without departing from the scope of the gist of the present invention.

### Embodiments

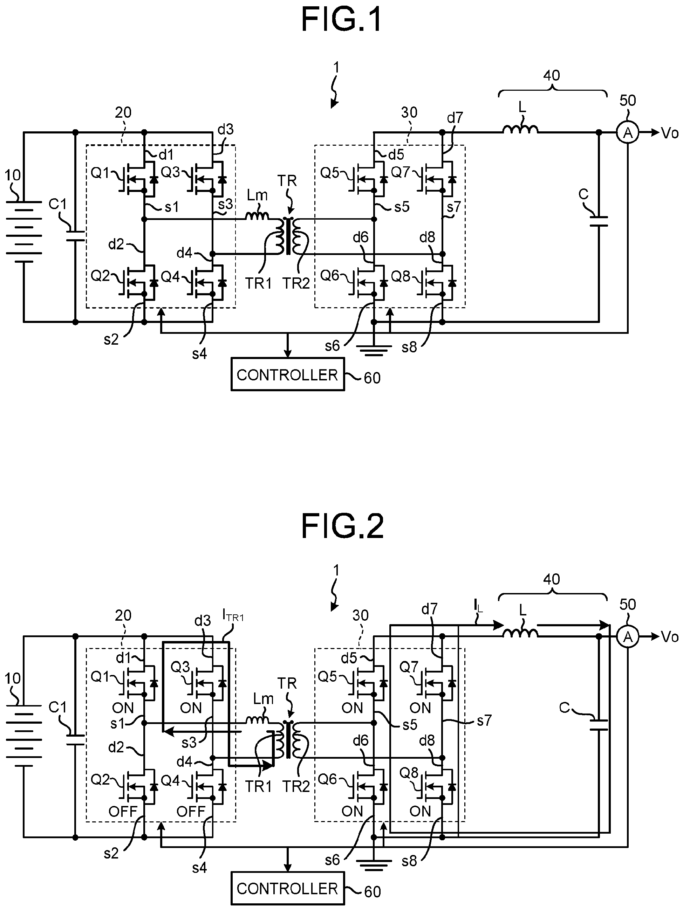

A power supply device 1 according to a first embodiment of the present invention will be described with reference to the accompanying drawings. FIG. 1 is a circuit diagram illustrating a configuration example of the power supply device 1 according to the first embodiment. The power supply device 1 is a DC/DC converter that transforms a voltage of a power supplied from a direct current power supply 10 and supplies the power of an output voltage Vo to a load part (not illustrated). The power supply device 1 is a phase-shift full-bridge type insulating DC/DC converter, for example. The power supply device 1 includes the direct current power supply 10, a switching circuit 20, a transformer TR, a rectifier circuit 30, a smoothing circuit 40, a current detection unit 50, and a controller 60 as illustrated in FIG. 1.

The direct current power supply 10 supplies the direct current power. The direct current power supply 10 is configured by including a plurality of battery cells. The battery cells are connected to each other in series. The direct current power supply is connected to the switching circuit 20, and supplies the direct current power to the switching circuit 20.

The switching circuit 20 converts the direct current power to the alternating current power. The switching circuit 20 is configured by including four switching elements. The switching circuit 20 is configured by including a field-effect transistor (FET) Q1, a FET Q2, a FET Q3, and a FET Q4, for example, thereby forming a full-bridge circuit. The FETs Q1 to Q4 are N-channel-type metal-oxide-semiconductor (MOS) FETs, for example.

In the switching circuit 20, a source terminal s1 of the FET Q1 is connected to a drain terminal d2 of the FET Q2, and a source terminal s3 of the FET Q3 is connected to a drain terminal d4 of the FET Q4. Furthermore, in the switching circuit 20, a drain terminal d1 of the FET Q1 is connected to a drain terminal d3 of the FET Q3, and a source terminal s2 of the FET Q2 is connected to a source terminal s4 of the FET Q4. Furthermore, in the switching circuit 20, a connection line connecting the drain terminal d1 of the FET Q1 and the drain terminal d3 of the FET Q3 is connected to a positive electrode of the direct current power supply 10, and a connection line connecting the source terminal s2 of the FET Q2 and the source terminal s4 of the FET Q4 is connected to a negative electrode of the direct current power supply 10. Furthermore, in the switching circuit 20, a connection line connecting the source terminal s1 of the FET Q1 and the drain terminal d2 of the FET Q2 is connected to one end of a primary winding TR1 to be described later, and a connection line connecting the source terminal s3 of the FET Q3 and the drain terminal d4 of the FET Q4 is connected to the other end of the primary winding TR1. Note here that FET Q3 and FET Q4 are the switching elements as the subject of soft switching control at the time of a discontinuous current mode to be described later and, as described above, the other end of the primary winding TR1 is connected to the terminals (the source terminal s3 of the FET Q3 and the drain terminal d4 of the FET Q4) where the potential of the drain-source terminals (input/output terminals) of the FET Q3 and the FET Q4 is adjusted. Soft switching control is the control of switching the FET Q3 and FET Q4 from OFF to ON by adjusting the potential difference between the drain-source terminals of the FET Q3 and FET Q4 to be equal to or smaller than a set potential difference that is defined in advance. Note here that the set potential difference is typically 0 V. Details of the soft switching control will be described later.

The switching circuit 20 configured in the manner described above switches the FETs Q1 to Q4 to ON or OFF based on switching signals output from the controller 60 to convert the direct current power supplied from the direct current power supply 10 to the alternating current power, and outputs the converted alternating current power to the primary winding TR1. Note that a smoothing capacitor C1 is provided between the switching circuit 20 and the direct current power supply 10.

The transformer TR transforms the voltage of the alternating current power. The transformer TR is configured by including the primary winding TR1 and a secondary winding TR2. The primary winding TR1 and the secondary winding TR2 are magnetically coupled while being insulated from each other. The primary winding TR1 is connected to the switching circuit 20. Specifically, one end of the primary winding TR1 is connected to the connection line that connects the source terminal s1 of the FET Q1 and the drain terminal d2 of the FET Q2, and the other end thereof is connected to the connection line that connects the source terminal s3 of the FET Q3 and the drain terminal d4 of the FET Q4. The primary winding TR1 is configured by including a leakage inductor Lm that does not contribute to transformation. The leakage inductor Lm accumulates the electrical energy (power) according to the current flowing in the leakage inductor Lm, and discharges the accumulated electrical energy.

The secondary winding TR2 is connected to the rectifier circuit 30. One end of the secondary winding TR2 is connected to a connection line that connects a source terminal s7 of a FET Q7 and a drain terminal d8 of a FET Q8 of the rectifier circuit 30 to be described later, and the other end thereof is connected to a connection line that connects a source terminal s5 of a FET Q5 and a drain terminal d6 of a FET Q6.

As for the transformer TR, polarities thereof are the same and the level of transformation is determined according to the turn ratio (transformation ratio) of the primary winding TR1 and the secondary winding TR2. The transformer TR transforms the alternating current power converted by the switching circuit 20, and outputs it to the rectifier circuit 30.

The rectifier circuit 30 rectifies the alternating current power to the direct current power. The rectifier circuit 30 is includes four switching elements, thereby configuring a full-bridge circuit. The rectifier circuit 30 is configured by including the FET Q5, the FET Q6, the FET Q7, and the FET Q8, for example, and performs full-wave rectification by those switching elements. The FETs Q5 to Q8 are N-channel type MOSFETs, for example.

In the rectifier circuit 30, the source terminal s5 of the FET Q5 is connected to the drain terminal s6 of the FET Q6, and the source terminal s7 of the FET Q7 is connected to the drain terminal d8 of the FET Q8. Furthermore, in the rectifier circuit 30, the drain terminal d5 of the FET Q5 is connected to the drain terminal d7 of the FET Q7, and the source terminal s6 of the FET Q6 is connected to the source terminal s8 of the FET Q8. Furthermore, in the rectifier circuit 30, a connection line that connecting the drain terminal d5 of the FET Q5 and the drain terminal d7 of the FET Q7 is connected to a coil L of the smoothing circuit 40, and a connection line connecting the source terminal s6 of the FET Q6 and the source terminal s8 of the FET Q8 is connected to the ground. Furthermore, in the rectifier circuit 30, a connection line connecting the source terminal s5 of the FET Q5 and the drain terminals d6 of the FET Q6 is connected to one end of the secondary winding TR2, and a connection line connecting the source terminal s7 of the FET Q7 and the drain terminal d8 of the FET Q8 is connected to the other end of the secondary winding TR2.

The rectifier circuit 30 configured in the manner described above switches the FETs Q5 to Q8 to ON or OFF based on a switching signal output from the controller 60 to rectify the alternating current power transformed by the transformer TR to the direct current power, and outputs the rectified direct current power to the smoothing circuit 40.

The smoothing circuit 40 smooths the rectified direct current power. The smoothing circuit 40 is configured by including the coil L and the capacitor C. The coil L is connected in series to the rectifier circuit 30. Specifically, one end of the coil L is connected a connection line that connects the drain terminal d5 of the FET Q5 and the drain terminal d7 of the FET Q7, and the other end thereof is connected to the load part. The capacitor C is provided at the following stage (the load part side) of the coil L, and connected in parallel to the rectifier circuit 30. The coil L and the capacitor C of the smoothing circuit 40 smoothen the direct current power rectified by the rectifier circuit 30, and outputs the smoothened direct current power to the load part.

The current detection unit 50 detects the current. The current detection unit 50 is provided between the smoothing circuit 40 and the load part, and detects the current output to the load part from the smoothing circuit 40. The current detection unit 50 is connected to the controller 60, and outputs the detected current value to the controller 60.

The controller 60 controls the switching circuit 20 and the rectifier circuit 30 by outputting switching signals. The controller 60 is electrically connected to the current detection unit 50, the switching circuit 20, and the rectifier circuit 30. The controller 60 controls the switching circuit 20 and the rectifier circuit 30 based on the detection result of the current detection unit 50.

For example, in a case where the current value detected by the current detection unit 50 exceeds a reference current value defined in advance, that is, in a case of a continuous current mode where the power supplied to the load part is relatively large and the current continuously flows into the load part, the controller 60 switches the FETs Q3 and Q4 as the subject of soft switching control from OFF to ON by the effect of the leakage inductor Lm. Specifically, in the case of the continuous current mode, the controller 60 adjusts the potential difference between the drain-source terminals of the FETs Q3 and Q4 as the subject of soft switching control to be equal to or smaller than a set potential difference defined in advance by the electrical energy accumulated in the leakage inductor Lm so as to switch the FETs Q3 and Q4 as the subject of the soft switching control from OFF to ON. Note here that the set potential difference is typically 0 V.

In the meantime, in a case where the current value detected by the current detection unit 50 is equal to or smaller than the reference current value defined in advance, that is, in a case of a discontinuous current mode where the power supplied to the load part is relatively small and the current discontinuously flows into the load part, the electrical energy accumulated in the leakage inductor Lm is insufficient so that it is difficult for the controller 60 to perform soft switching control of the FETs Q3 and Q4 by the leakage inductor Lm. Therefore, the controller 60 performs soft switching control of the FETs Q3 and Q4 by using the power accumulated in the smoothing circuit 40 on the secondary side. Specifically, in the case of the discontinuous current mode, the controller 60 allows the current flowing backward due to resonance of the coil L and the capacitor C of the smoothing circuit 40 to flow in the secondary winding TR2 via the rectifier circuit 30, and allows the current to flow in the primary winding TR1 by the current flowing in the second winding TR2 to adjust the potential difference between the drain-source terminals of the FETs Q3 and Q4 as the subject of soft switching control to be equal to or smaller than the set potential difference so as to switch the FETs Q3 and Q4 as the subject of soft switching control from OFF to ON.

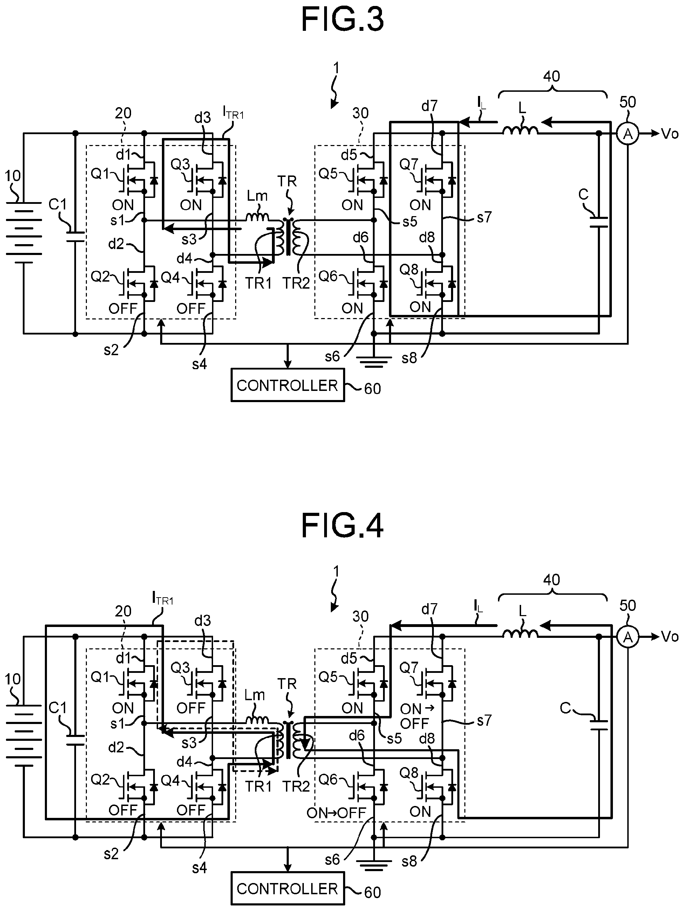

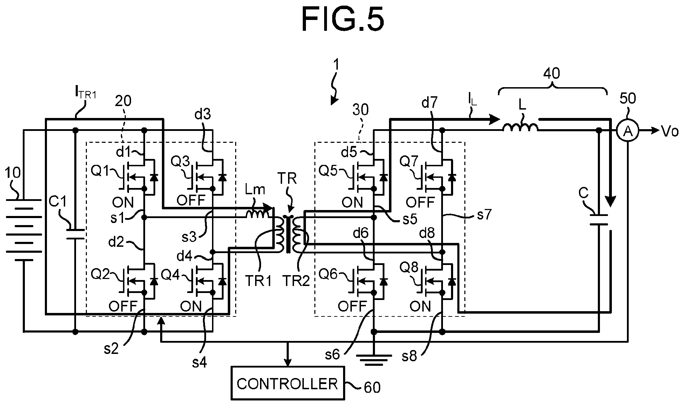

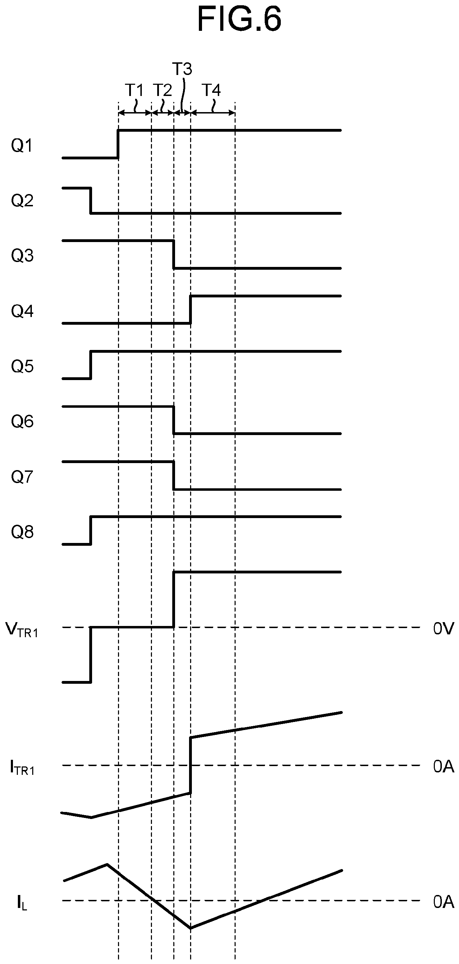

Next, operations of the power supply device 1 will be described in detail. FIG. 2 is a circuit diagram illustrating a first operation example of the power supply device 1. FIG. 3 is a circuit diagram illustrating a second operation example of the power supply device 1. FIG. 4 is a circuit diagram illustrating a third operation example of the power supply device 1. FIG. 5 is a circuit diagram illustrating a fourth operation example of the power supply device 1. FIG. 6 is a timing chart illustrating the first to fourth operation examples of the power supply device 1. In the examples illustrated in FIG. 2 to FIG. 6, described are cases of the discontinuous current mode where the power supplied to the load part is relatively small and the current discontinuously flows into the load part.

In the power supply device 1, in a case of the continuous current mode, the controller 60 turns ON the FETs Q1, Q3, and Q5 to Q8 and OFF the FETs Q2 and Q4 as illustrated in FIG. 2 and FIG. 6, for example, to perform a commutation operation that is an operation of switching the path of the current in the primary-side circuit including the primary winding TR1 and the switching circuit 20 and in the secondary-side circuit including the secondary winding TR2 and the rectifier circuit 30 (in an operation period T1 illustrated in FIG. 6). At this time, as illustrated in FIG. 6, in the operation period T1, a voltage V_{TR1} of 0 V is applied to the primary winding TR1, a negative current I_{TR1} flows in the primary winding TR1, and a positive current I_{L} flows in the coil L of the smoothing circuit 40.

In an operation period T2 following the operation period T1 while ON/OFF of the FETs Q1 to Q8 are the same as those of the operation period T1, the controller 60 operates such that the voltage V_{TR1} of 0 V is applied to the primary winding TR1, the negative current I_{TR1} smaller than that of the operation period T1 flows in the primary winding TR1, and the backflow negative current I_{L} flows into the coil L of the smoothing circuit 40 (see FIG. 3). The operation period T2 is in the discontinuous current mode where the power supplied to the load part is relatively small, so that the coil L and the capacitor C of the smoothing circuit 40 resonate and the current flowing in the coil L flows backward. As a result, the negative current I_{L} flows into the coil L from the capacitor C.

The controller 60 allows the current to flow in the primary-side circuit by the negative current I_{L} generated by the backflow to perform soft switching control together with the leakage inductor Lm where the energy is insufficient in the discontinuous current mode. As illustrated in FIG. 4, for example, the controller 60 turns OFF the FETs Q3, Q6, and Q7 so that the negative current I_{L} flowing backward due to resonance of the coil L and the capacitor C flows to the secondary winding TR2 via the rectifier circuit 30. Then, the controller 60 allows the current to flow in the primary winding TR1 by the negative current I_{L} flowing in the secondary winding TR2 and the energy of the leakage inductor Lm (applies the voltage V_{TR1} to the primary winding TR1). Thereby, the controller 60 lowers the voltage of the drain terminal d4 of the FET Q4 as the subject of soft switching control to adjust the potential difference between the drain terminal d4 and the source terminal s4 of the FET Q4 to be equal to or smaller than the set potential difference (operation period T3). That is, the controller 60 discharges the electric charge of a parasitic capacitance of the FET Q4 and charges the electric charge of a parasitic capacitance of the FET Q3. Then, as illustrated in FIG. 5, the controller 60 switches the FET Q4 as the subject of soft switching control from OFF to ON, and supplies the power to the load part from the direct current power supply 10 (operation period T4). In the operation period T4, the positive current I_{TR1} flows in the primary winding TR1, and the current I_{L} flowing in the coil L starts to change from negative to positive. Thereby, in a case of the discontinuous current mode, the controller 60 can perform soft switching control of the FET Q4 by using the power accumulated in the smoothing circuit 40 on the secondary side.

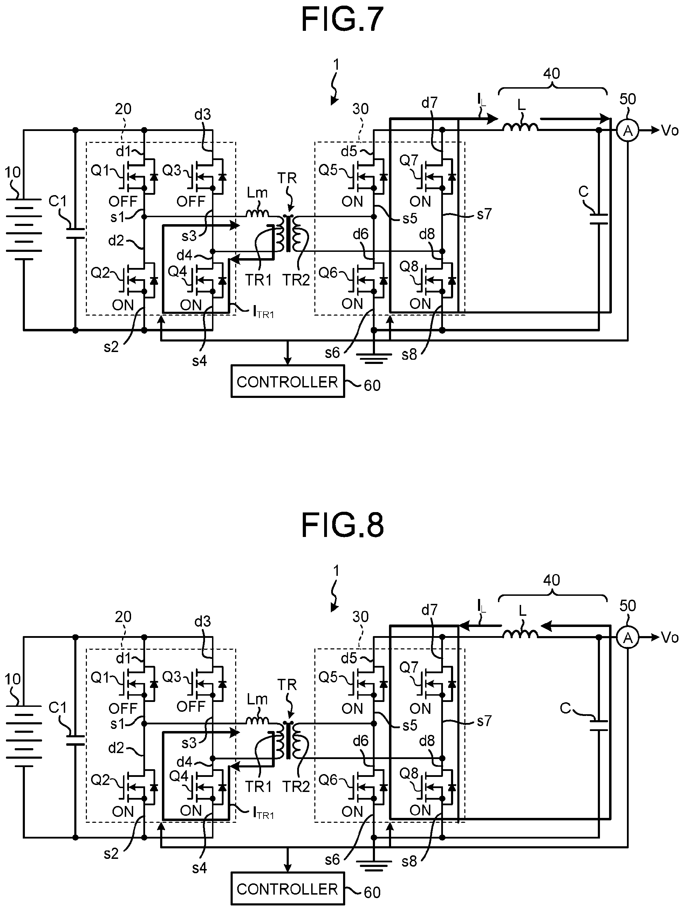

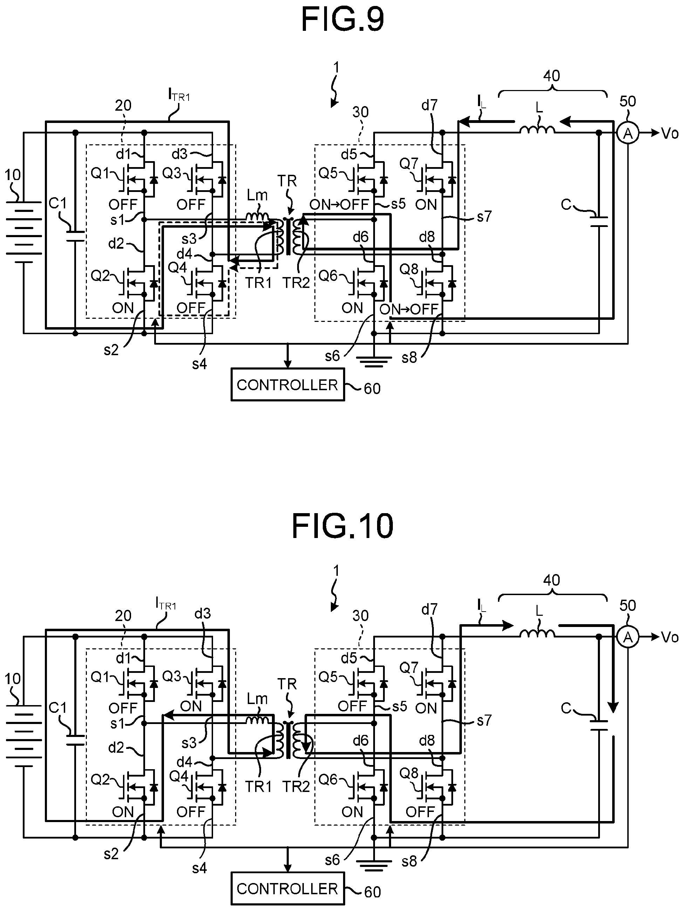

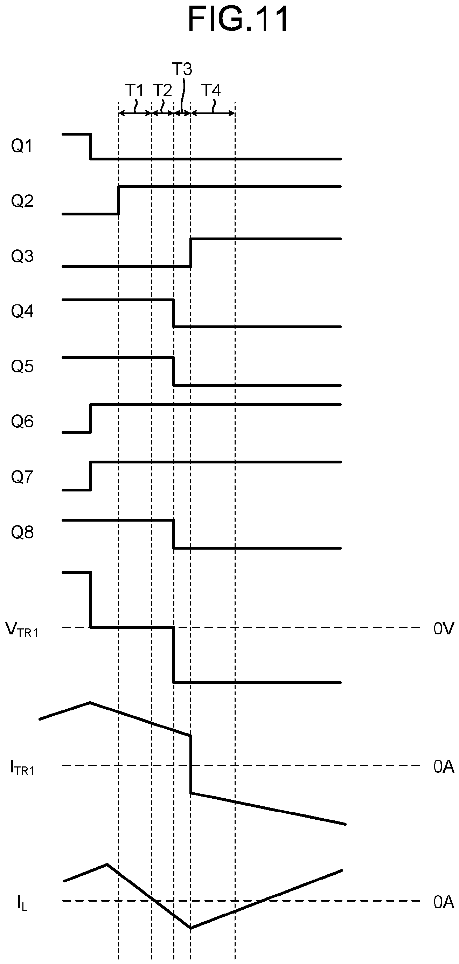

Next, described are examples where the FET Q3 as the subject of soft switching control is switched from OFF to ON in the discontinuous current mode. FIG. 7 is a circuit diagram illustrating a fifth operation example of the power supply device 1. FIG. 8 is a circuit diagram illustrating a sixth operation example of the power supply device 1. FIG. 9 is a circuit diagram illustrating a seventh operation example of the power supply device 1. FIG. 10 is a circuit diagram illustrating an eighth operation example of the power supply device 1. FIG. 11 is a timing chart illustrating the fifth to eighth operation examples of the power supply device 1.

In the power supply device 1, in a case of the continuous current mode, the controller 60 turns ON the FETs Q2, Q4, and Q5 to Q8 and OFF the FETs Q1 and Q3 as illustrated in FIG. 7 and FIG. 11, for example, to perform a commutation operation that is an operation of switching the path of the current in the primary-side circuit including the primary winding TR1 and the switching circuit 20 and in the secondary-side circuit including the secondary winding TR2 and the rectifier circuit 30 (in an operation period T1 illustrated in FIG. 7). At this time, as illustrated in FIG. 11, in the operation period T1, a voltage V_{TR1} of 0 V is applied to the primary winding TR1, a positive current I_{TR1} flows in the primary winding TR1, and a positive current I_{L} flows in the coil L of the smoothing circuit 40.

In an operation period T2 following the operation period T1 while ON/OFF of the FETs Q1 to Q8 are the same as those of the operation period T1 of FIG. 11, the controller 60 operates such that the voltage V_{TR1} of 0 V is applied to the primary winding TR1, the positive current I_{TR1} smaller than that of the operation period T1 flows in the primary winding TR1, and the backflow negative current I_{L} flows into the coil L of the smoothing circuit 40. The operation period T2 is in the discontinuous current mode where the power supplied to the load part is relatively small, so that the coil L and the capacitor C of the smoothing circuit 40 resonate and the current flowing in the coil L flows backward. As a result, the negative current I_{L} flows into the coil L from the capacitor C.

The controller 60 allows the current to flow in the primary-side circuit by the negative current I_{L} generated by the backflow to perform soft switching control together with the leakage inductor Lm where the energy is insufficient in the discontinuous current mode. As illustrated in FIG. 9, for example, the controller 60 turns OFF the FETs Q4, Q5, and Q8 so that the negative current I_{L} flowing backward due to resonance of the coil L and the capacitor C flows to the secondary winding TR2 via the rectifier circuit 30. Then, the controller 60 allows the current to flow in the primary winding TR1 by the negative current I_{L} flowing in the secondary winding TR2 and the energy of the leakage inductor Lm (applies the voltage V_{TR1} to the primary winding TR1). Thereby, the controller 60 increases the voltage of the source terminal s3 of the FET Q3 as the subject of soft switching control to adjust the potential difference between the drain terminal d3 and the source terminal s3 of the FET Q3 to be equal to or smaller than the set potential difference (operation period T3). That is, the controller 60 charges the electric charge of the parasitic capacitance of the FET Q3 and discharges the electric charge of the parasitic capacitance of the FET Q4. Then, as illustrated in FIG. 10, the controller 60 switches the FET Q3 as the subject of soft switching control from OFF to ON, and supplies the power to the load part from the direct current power supply 10 (operation period T4). In the operation period T4, the negative current I_{TR1} flows in the primary winding TR1, and the current I_{L} flowing in the coil L starts to change from negative to positive.

As described above, the power supply device 1 according to the first embodiment includes the direct current power supply 10, the switching circuit 20, the rectifier circuit 30, the smoothing circuit 40, the current detection unit 50, and the controller 60. The direct current power supply 10 supplies the direct current power. The switching circuit 20 includes the FETs Q1 to Q4 that convert the direct current power supplied from the direct current power supply 10 to the alternating current power. The transformer TR includes the primary winding TR1 and the secondary winding TR2 that transforms the alternating current power converted by the switching circuit 20, and the primary winding TR1 is connected to the switching circuit 20. The rectifier circuit 30 is connected to the secondary winding TR2, and rectifies the alternating current power transformed by the transformer TR to the direct current power. The smoothing circuit 40 includes the coil L and the capacitor C that smooths the direct current power that is rectified by the rectifier circuit 30. The current detection unit 50 detects the current of the direct current power that is smoothened by the smoothing circuit 40. The controller 60 controls the switching circuit 20 and the rectifier circuit 30 based on the detection result of the current detection unit 50, and adjusts the potential difference between the drain-source terminals of the FETs Q1 to Q4 to be equal to or smaller than the set potential difference defined in advance to perform soft switching control of switching the FETs Q1 to Q4 from OFF to ON. The primary winding TR1 is connected to, out of the drain-source terminals in the FETs Q3 and Q4 as the subject of soft switching control, the source terminal s3 and the drain terminal d4 as the terminals where the potential of the drain-source terminal is adjusted. In a case where the current value detected by the current detection unit 50 is equal to or smaller than the reference current value defined in advance, the controller 60 allows the current flowing backward due to resonance of the coil L and the capacitor C to flow in the secondary winding TR2 via the rectifier circuit 30, and allows the current to flow in the primary winding TR1 by the current flowing in the secondary winding TR2 to adjust the potential difference between the drain-source terminals of the FETs Q3 and Q4 as the subject of soft switching control to be equal to or smaller than the set potential difference so as to switch the FETs Q3 and Q4 as the subject of soft switching control from OFF to ON.

With such configuration, the power supply device 1 can switch the FETs Q3 and Q4 in a state where the potential difference between the drain-source terminals of the FETs Q3 and Q4 is 0 V even under the discontinuous current mode where the current flowing in the load part is relatively small. Thereby, the power supply device 1 can properly perform zero voltage switching (ZVS) in a case of the discontinuous current mode, so that it is possible to suppress switching loss. Furthermore, since the power supply device 1 is capable of performing soft switching control in the discontinuous current mode without adding a new component, increase in the heat generated by the components can be suppressed and a higher frequency can be implemented easily. Furthermore, the power supply device 1 can minimize the size of the magnetic components such as the transformer TR and the like due to implementation of the higher frequency, so that the device can be minimized in size as well. Since the power supply device 1 is capable of performing soft switching control in the discontinuous current mode by changing the control method, it is possible to suppress increase in the manufacture cost.

The power supply device 1 further includes the leakage inductor Lm that is connected to the primary winding TR1. When the current value detected by the current detection unit 50 exceeds the reference current value, the controller 60 adjusts the potential difference between the drain-source terminals of the FETs Q3 and Q4 as the subject of soft switching control by the effect of the leakage inductor Lm to be equal to or smaller than the set potential difference so as to switch the FETs Q3 and Q4 as the subject of soft switching control from OFF to ON. With such a configuration, in a case of the continuous current mode where the current flowing in the load part is relatively large, the power supply device 1 can switch the FETs Q3 and Q4 in a state where the potential difference between the drain-source terminals of the FETs Q3 and Q4 is 0 V. Thereby, the power supply device 1 can properly perform zero voltage switching (ZVS) in a case of the continuous current mode, so that it is possible to suppress switching loss.

In the power supply device 1, the switching circuit 20 includes the FET Q1, the FET Q2, the FET Q3, and the FET Q4. In the switching circuit 20, the source terminal s1 of the FET Q1 is connected to the drain terminal d2 of the FET Q2, and the source terminal s3 of the FET Q3 is connected to the drain terminal d4 of the FET Q4. Furthermore, in the switching circuit 20, the drain terminal d1 of the FET Q1 is connected to the drain terminal d3 of the FET Q3, and the source terminal s2 of the FET Q2 is connected to the source terminal s4 of the FET Q4. Furthermore, in the switching circuit 20, a connection line connecting the drain terminal d1 and the drain terminal d3 is connected to the positive electrode of the direct current power supply 10, and the connection line connecting the source terminal s2 and the source terminal s4 is connected to the negative electrode of the direct current power supply 10. Furthermore, in the switching circuit 20, the connection line connecting the source terminal s1 and the drain terminal d2 is connected to one end of the primary winding TR1, and the connection line connecting the source terminal s3 and the drain terminal d4 is connected to the other end of the primary winding TR1. In a case where the current value detected by the current detection unit 50 is equal to or smaller than the reference current value when switching OFF the FET Q3 and switching ON the FET Q4 as the subject of soft switching control from a state where the FET Q1 and FET Q3 are ON and the FET Q2 and FET Q4 are OFF, the controller 60 switches OFF the FET Q3 and then allows the current flowing backward due to resonance of the coil L and the capacitor C to flow in the secondary winding TR2 via the rectifier circuit 30. Then, the controller 60 decreases the voltage of the drain terminal d4 of the FET Q4 as the subject of soft switching control by allowing the current to flow in the primary winding TR1 by the current flowing in the secondary winding TR2, and adjusts the potential difference between the drain terminal d4 and the source terminal s4 of the FET Q4 to switch the FET Q4 as the subject of soft switching control from OFF to ON. With such a configuration, even in a case of the discontinuous current mode where the current flowing in the load part is relatively small, the power supply device 1 is capable of switching the FET Q4 in a state where the potential difference between the drain-source terminals of the FET Q4 is 0 V. Thereby, the power supply device 1 can properly perform zero voltage switching (ZVS) of the FET Q4 in a case of the discontinuous current mode, so that it is possible to suppress switching loss.

In the power supply device 1, in a case where the current value detected by the current detection unit 50 is equal to or smaller than the reference current value when switching OFF the FET Q4 and switching ON the FET Q3 as the subject of soft switching control from a state where the FET Q2 and FET Q4 are ON and the FET Q1 and FET Q3 are OFF, the controller 60 switches OFF the FET Q4 and then allows the current flowing backward due to resonance of the coil L and the capacitor C to flow in the secondary winding TR2 via the rectifier circuit 30. Then, the controller 60 increases the voltage of the source terminal s3 of the FET Q3 as the subject of soft switching control by allowing the current to flow in the primary winding TR1 by the current flowing in the secondary winding TR2, and adjusts the potential difference between the drain terminal d3 and the source terminal s3 of the FET Q3 to switch the FET Q3 as the subject of soft switching control from OFF to ON. With such a configuration, even in a case of the discontinuous current mode where the current flowing in the load part is relatively small, the power supply device 1 is capable of switching the FET Q3 in a state where the potential difference between the drain-source terminals of the FET Q3 is 0 V. Thereby, the power supply device 1 can properly perform zero voltage switching (ZVS) of the FET Q3 in a case of the discontinuous current mode, so that it is possible to suppress switching loss.

### Second Embodiment

Next, a power supply device 1A according to a second embodiment will be described. In the second embodiment, same reference signs are applied to structural elements same as those of the first embodiment, and detailed explanations thereof are omitted. The power supply device 1A according to the second embodiment is different from the power supply device 1 according to the first embodiment in respect that it includes a rectifier circuit 30A utilizing a center tap CT of the transformer TR.

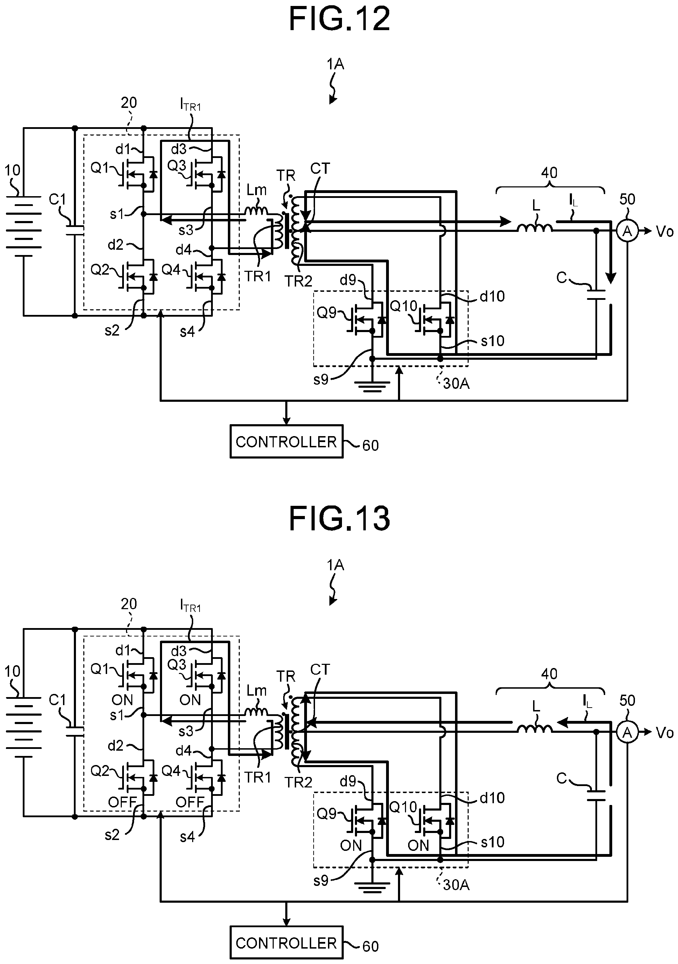

As illustrated in FIG. 12, the transformer TR has the center tap CT provided in the center of the secondary winding TR2. The center tap CT is connected to the coil L of the smoothing circuit 40.

The rectifier circuit 30A is configured by including a FET Q9 and a FET Q10, and performs full-wave rectification by those switching elements. The FET Q9 and the FET Q10 are N-channel type MOSFETs, for example.

In the rectifier circuit 30A, a drain terminal 9d of the FET Q9 is connected to one end of the secondary winding TR2, and a source terminal s9 of the FET Q9 is connected to the ground. Furthermore, in the rectifier circuit 30A, a drain terminal d10 of the FET Q10 is connected to the other end of the secondary winding TR2, and a source terminal s10 of the FET Q10 is connected to the ground. The rectifier circuit 30A switches ON or OFF the FETs Q9 and Q10 based on switching signals output from the controller 60 to rectify the alternating current power transformed by the transformer TR to the direct current power, and outputs the rectified direct current power to the smoothing circuit 40.

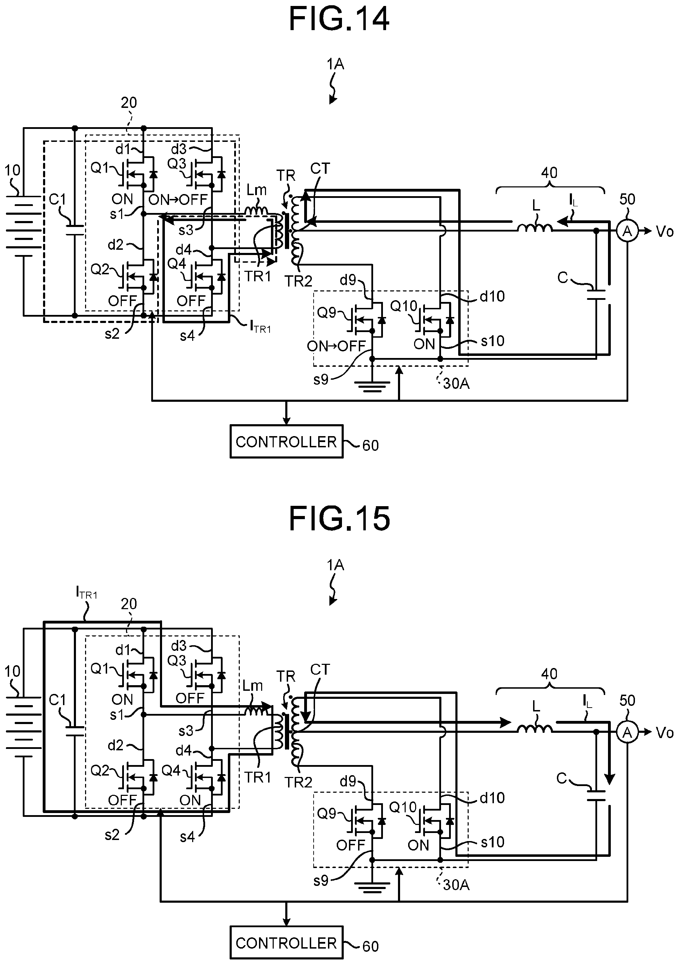

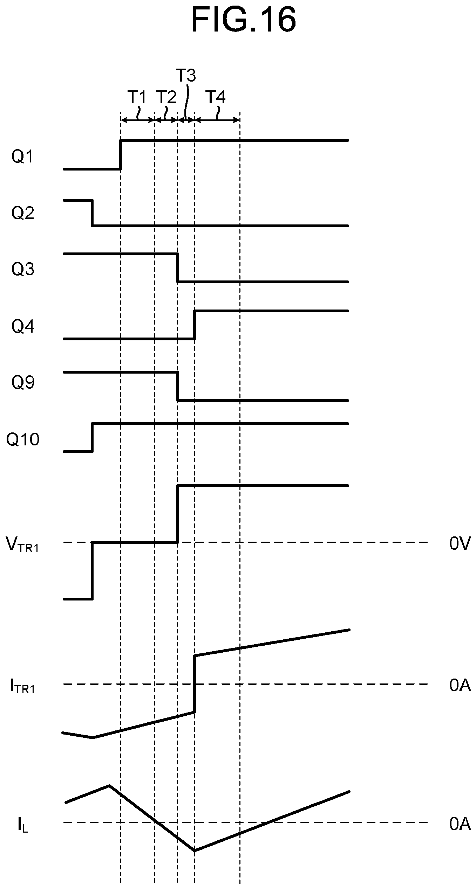

Next, operations of the power supply device 1A will be described in detail. FIG. 12 is a circuit diagram illustrating a first operation example of the power supply device 1A according to the second embodiment. FIG. 13 is a circuit diagram illustrating a second operation example of the power supply device 1A according to the second embodiment. FIG. 14 is a circuit diagram illustrating a third operation example of the power supply device 1A according to the second embodiment. FIG. 15 is a circuit diagram illustrating a fourth operation example of the power supply device 1A according to the second embodiment. FIG. 16 is a timing chart illustrating the first to fourth operation examples of the power supply device 1A according to the second embodiment. In the examples illustrated in FIG. 12 to FIG. 16, described are cases of the discontinuous current mode where the power supplied to the load part is relatively small and the current discontinuously flows into the load part.

In the power supply device 1A, in a case of the continuous current mode, the controller 60 turns ON the FETs Q1, Q3, Q9, and Q10 and OFF the FETs Q2 and Q4 as illustrated in FIG. 12 and FIG. 16, for example, to perform a commutation operation that is an operation of switching the path of the current in the primary-side circuit including the primary winding TR1 and the switching circuit 20 and in the secondary-side circuit including the secondary winding TR2 and the rectifier circuit 30A (in an operation period T1 illustrated in FIG. 16). At this time, as illustrated in FIG. 16, in the operation period T1, a voltage V_{TR1} of 0 V is applied to the primary winding TR1, a negative current I_{TR1} flows in the primary winding TR1, and a positive current I_{L} flows in the coil L of the smoothing circuit 40.

In an operation period T2 following the operation period T1 while ON/OFF of the FETs Q1 to Q4, Q9, and Q10 are the same as those of the operation period T1, the controller 60 operates such that the voltage V_{TR1} of 0 V is applied to the primary winding TR1, the negative current I_{TR1} smaller than that of the operation period T1 flows in the primary winding TR1, and the backflow negative current I_{L} flows into the coil L of the smoothing circuit 40 (see FIG. 13). The operation period T2 is in the discontinuous current mode where the power supplied to the load part is relatively small, so that the coil L and the capacitor C of the smoothing circuit 40 resonate and the current flowing in the coil L backflows. As a result, the negative current I_{L} flows into the coil L from the capacitor C.

The controller 60 allows the current to flow in the primary-side circuit by the negative current I_{L} generated by the backflow to perform soft switching control together with the leakage inductor Lm where the energy is insufficient in the discontinuous current mode. As illustrated in FIG. 14, for example, the controller 60 turns OFF the FETs Q3 and Q9 so that the negative current I_{L} flowing backward due to resonance of the coil L and the capacitor C flows between one end of the secondary winding TR2 and the center tap CT via the rectifier circuit 30A. Then, the controller 60 allows the current to flow in the primary winding TR1 by the negative current I_{L} flowing in the secondary winding TR2 and the energy of the leakage inductor Lm (applies the voltage V_{TR1} to the primary winding TR1). Thereby, the controller 60 lowers the voltage of the drain terminal d4 of the FET Q4 as the subject of soft switching control to adjust the potential difference between the drain terminal d4 and the source terminal s4 of the FET Q4 to be equal to or smaller than the set potential difference (operation period T3). Then, as illustrated in FIG. 15, the controller 60 switches the FET Q4 as the subject of soft switching control from OFF to ON, and supplies the power to the load part from the direct current power supply 10 (operation period T4). In the operation period T4, the positive current I_{TR1} flows in the primary winding TR1, and the current I_{L} flowing in the coil L starts to change from negative to positive. Thereby, in a case of the discontinuous current mode, the controller 60 can perform soft switching control of the FET Q4 by using the power accumulated in the smoothing circuit 40 on the secondary side.

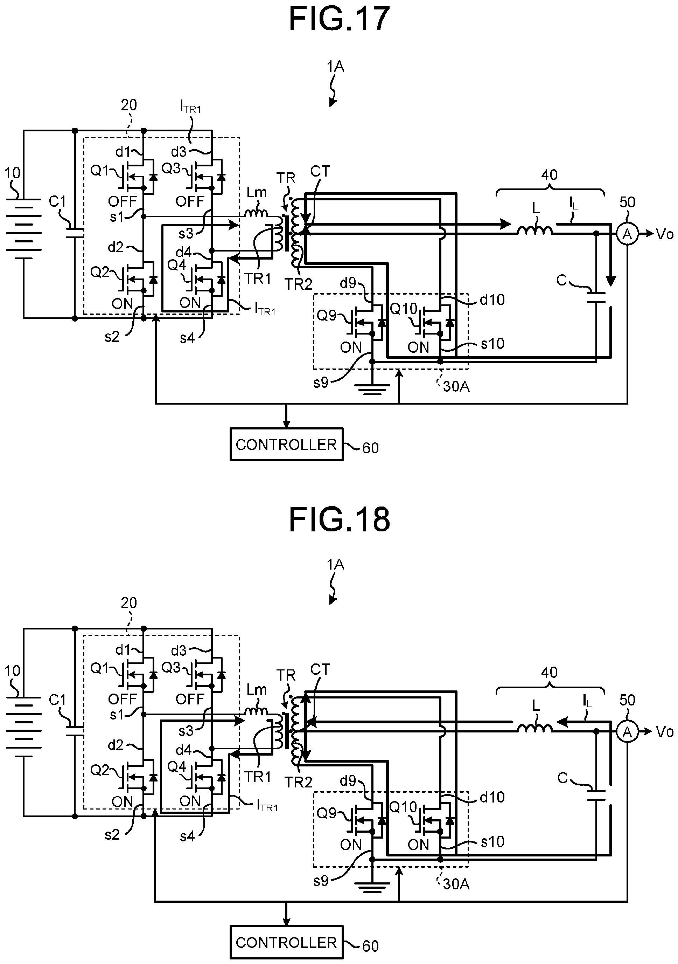

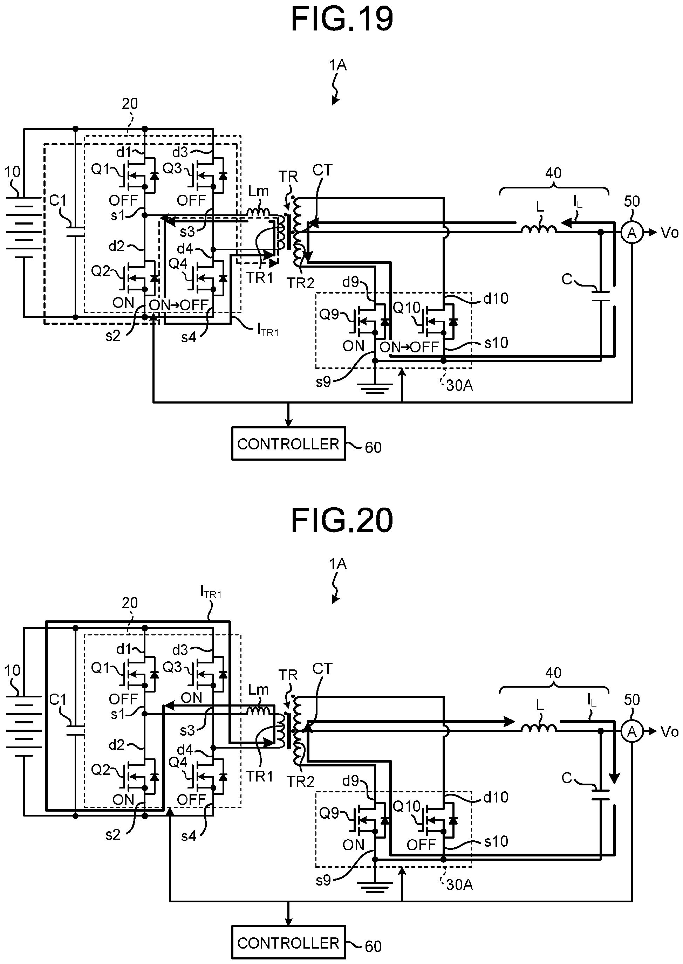

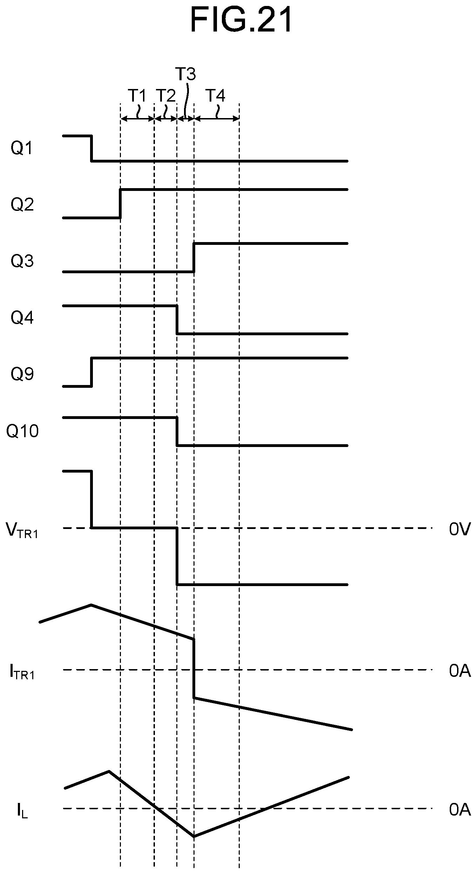

Next, described are examples where the FET Q3 as the subject of soft switching control is switched from OFF to ON in the discontinuous current mode. FIG. 17 is a circuit diagram illustrating a fifth operation example of the power supply device 1A according to the second embodiment. FIG. 18 is a circuit diagram illustrating a sixth operation example of the power supply device 1A according to the second embodiment. FIG. 19 is a circuit diagram illustrating a seventh operation example of the power supply device 1A according to the second embodiment. FIG. 20 is a circuit diagram illustrating an eighth operation example of the power supply device 1A according to the second embodiment. FIG. 21 is a timing chart illustrating the fifth to eighth operation examples of the power supply device 1A according to the second embodiment.

In the power supply device 1A, in a case of the continuous current mode, the controller 60 turns ON the FETs Q2, Q4, Q9 and Q10 and OFF the FETs Q1 and Q3 as illustrated in FIG. 17 and FIG. 21, for example, to perform a commutation operation that is an operation of switching the path of the current in the primary-side circuit including the primary winding TR1 and the switching circuit 20 and in the secondary-side circuit including the secondary winding TR2 and the rectifier circuit 30A (in an operation period T1 illustrated in FIG. 17). At this time, as illustrated in FIG. 21, in the operation period T1, a voltage V_{TR1} of 0 V is applied to the primary winding TR1, a positive current I_{TR1} flows in the primary winding TR1, and a positive current I_{L} flows in the coil L of the smoothing circuit 40.

In an operation period T2 following the operation period T1 while ON/OFF of the FETs Q1 to Q4, Q9 and Q10 are the same as those of the operation period T1 of FIG. 21, the controller 60 operates such that the voltage V_{TR1} of 0 V is applied to the primary winding TR1, the positive current I_{TR1} smaller than that of the operation period T1 flows in the primary winding TR1, and the backflow negative current I_{L} flows into the coil L of the smoothing circuit 40. The operation period T2 is in the discontinuous current mode where the power supplied to the load part is relatively small, so that the coil L and the capacitor C of the smoothing circuit 40 resonate and the current flowing in the coil L flows backward. As a result, the negative current I_{L} flows into the coil L from the capacitor C.

The controller 60 allows the current to flow in the primary-side circuit by the negative current I_{L} generated by the backflow to perform soft switching control together with the leakage inductor Lm where the energy is insufficient in the discontinuous current mode. As illustrated in FIG. 19, for example, the controller 60 turns OFF the FETs Q4 and Q10 so that the negative current I_{L} flowing backward due to resonance of the coil L and the capacitor C flows between the other end of the secondary winding TR2 and the center tap CT via the rectifier circuit 30A. Then, the controller 60 allows the current to flow in the primary winding TR1 by the negative current I_{L} flowing in the secondary winding TR2 and the energy of the leakage inductor Lm (applies the voltage V_{TR1} to the primary winding TR1). Thereby, the controller 60 increases the voltage of the source terminal s3 of the FET Q3 as the subject of soft switching control to adjust the potential difference between the drain terminal d3 and the source terminal s3 of the FET Q3 to be equal to or smaller than the set potential difference (operation period T3). Then, as illustrated in FIG. 20, the controller 60 switches the FET Q3 as the subject of soft switching control from OFF to ON, and supplies the power to the load part from the direct current power supply 10 (operation period T4). In the operation period T4, the negative current I_{TR1} flows in the primary winding TR1, and the current I_{L} flowing in the coil L starts to change from negative to positive.

As described above, in a case of the discontinuous current mode where the current flowing in the load part is relatively small, the power supply device 1A according to the second embodiment even with the rectifier circuit 30A utilizing the center tap CT of the transformer TR is capable of switching the FETs Q3 and Q4 in a state where the potential difference between the drain-source terminals of the FETs Q3 and Q4 is 0 V. Thereby, the power supply device 1 can properly perform zero voltage switching (ZVS) in a case of the discontinuous current mode, so that it is possible to suppress switching loss.

While the FETs Q1 to Q8 are described above by referring to the case of the N-channel type MOSFETs, the FETs Q1 to Q8 are not limited thereto but may be other types of switching elements such as P-channel type MOSFETs or insulated gate bipolar transistors (IGBTs).

While the switching circuit 20 is described by referring to the case of configuring a full-bridge circuit including four switching elements, the switching circuit 20 is not limited thereto but may be in other configurations.

The rectifier circuit 30 is described by referring to the case of configuring a full-bridge circuit that includes four switching elements, and the rectifier circuit 30A is described by referring to the configuration utilizing the center tap CT of the transformer TR. However, the rectifier circuits 30 and 30A are not limited thereto but may be in other rectifier circuit configurations.

The power supply device according to the present embodiment is capable of switching the semiconductor switching elements by adjusting the potential difference between the input/output terminals of the semiconductor switching elements to 0 V even when the current flowing in the load part is relatively small. Thereby, the power supply device can properly perform zero voltage switching, so that it is possible to suppress switching loss.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A power supply device (1) comprising:
a direct current power supply (10) that supplies a direct current power;
a switching circuit (20) that includes a plurality of semiconductor switching elements (Q1-Q4) configured to convert the direct current power supplied from the direct current power supply (10) to an alternating current power;
a transformer (TR) that includes a primary winding (TR1) and a secondary winding (TR2) configured to transform the alternating current power converted by the switching circuit (20), the primary winding (TR1) being connected to the switching circuit (20);
a rectifier circuit (30, 30A) that is connected to the secondary winding (TR2) and rectifies the alternating current power transformed by the transformer (TR) to the direct current power;
a smoothing circuit (40) that includes a coil (L) and a capacitor (C) configured to smooth the direct current power rectified by the rectifier circuit (30, 30A);
a current detection unit (50) that detects a current of the direct current power smoothened by the smoothing circuit (40); and
a controller (60) that controls the switching circuit (20) and the rectifier circuit (30, 30A) based on a detection result of the current detection unit, and adjusts a potential difference between input/output terminals of the semiconductor switching elements (Q1-Q4) to be equal to or smaller than a set potential difference defined in advance to perform soft switching control of switching the semiconductor switching elements (Q1-Q4) from OFF to ON, wherein
the primary winding (TR1) is connected to, out of the input/output terminals (d3, s3, d4, s4) of the semiconductor switching elements as a subject of the soft switching control, the terminals (s3, d4) where a potential of the input/output terminals (d3, s3, d4, s4) is adjusted, and
in a case where the current value detected by the current detection unit (50) is equal to or smaller than a reference current value defined in advance, the controller (60) allows a current flowing backward due to resonance of the coil (L) and the capacitor (C) to flow in the secondary winding (TR2) via the rectifier circuit (30, 30A) and allows a current to flow in the primary winding (TR1) by the current flowing in the secondary winding (TR2) to adjust the potential difference between the input/output terminals (d3, s3, d4, s4) of the semiconductor switching elements (Q3, Q4) as the subject of the soft switching control to be equal to or smaller than the set potential difference so as to switch the semiconductor switching elements (Q3, Q4) as the subject of the soft switching control from OFF to ON.

2. The power supply device (1) according to claim 1, further comprising:
an inductor (Lm) that is connected to the primary winding (TR1), wherein
in a case where the current value detected by the current detection unit (50) exceeds the reference current value, the controller (60) adjusts the potential difference between the input/output terminals (d3, s3, d4, s4) of the semiconductor switching elements (Q3, Q4) as the subject of the soft switching control to be equal to or smaller than the set potential difference by an effect of the inductor so as to switch the semiconductor switching elements (Q3, Q4) as the subject of the switching control from OFF to ON.

3. The power supply device (1) according to claim 1 or 2, wherein
the switching circuit (20) comprises, as the semiconductor switching elements, a first semiconductor switching element (Q1), a second semiconductor switching element (Q2), a third semiconductor switching element (Q3), and a fourth semiconductor switching element (Q4),
a first source terminal (s1) of the first semiconductor switching element (Q1) is connected to a second drain terminal (d2) of the second semiconductor switching element (Q2),
a third source terminal (s3) of the third semiconductor switching element (Q3) is connected to a fourth drain terminal (d4) of the fourth semiconductor switching element (Q4),
a first drain terminal (d1) of the first semiconductor switching element (Q1) is connected to a third drain terminal (d3) of the third semiconductor switching element (Q3),
a second source terminal (s2) of the second semiconductor switching element (Q2) is connected to a fourth source terminal (s4) of the fourth semiconductor switching element (Q4),
a connection line connecting the first drain terminal (d1) and the third drain terminal (d3) is connected to a positive electrode of the direct current power supply (10),
a connection line connecting the second source terminal (s2) and the fourth source terminal (s4) is connected to a negative electrode of the direct current power supply (10),
a connection line connecting the first source terminal (s1) and the second drain terminal (d2) is connected to one end of the primary winding (TR1), and
a connection line connecting the third source terminal (s3) and the fourth drain terminal (d4) is connected to the other end of the primary winding (TR1), and
in a case where the current value detected by the current detection unit (50) is equal to or smaller than the reference current value when switching OFF the third semiconductor switching element (Q3) and switching ON the fourth semiconductor switching element (Q4) as the subject of the soft switching control from a state where the first semiconductor switching element (Q1) and the third semiconductor switching element (Q3) are ON and the second semiconductor switching element (Q2) and the fourth semiconductor switching element (Q4) are OFF, the controller switches OFF the third semiconductor switching element (Q3), allows the current flowing backward due to resonance of the coil (L) and the capacitor (C) to flow in the secondary winding (TR2) via the rectifier circuit and allows the current flowing in the secondary winding (TR2) to flow in the primary winding (TR1) to decrease a voltage of the fourth drain terminal (d4) of the fourth semiconductor switching element (Q4) as the subject of the soft switching control, and adjusts a potential difference between the fourth drain terminal (d4) and the fourth source terminal (s4) to be equal to or smaller than the set potential difference so as to switch the fourth semiconductor switching element (Q4) as the subject of the soft switching control from OFF to ON.

4. The power supply device (1) according to any one of claims 1 to 3, wherein
the switching circuit (20) comprises, as the semiconductor switching elements, a first semiconductor switching element (Q1), a second semiconductor switching element (Q2), a third semiconductor switching element (Q3), and a fourth semiconductor switching element (Q4),
a first source terminal (s1) of the first semiconductor switching element (Q1) is connected to a second drain terminal (d2) of the second semiconductor switching element (Q2) is connected,
a third source terminal (s3) of the third semiconductor switching element (Q3) is connected to a fourth drain terminal (d4) of the fourth semiconductor switching element (Q4),
a first drain terminal (d1) of the first semiconductor switching element (Q1) is connected to a third drain terminal (d3) of the third semiconductor switching element (Q3),
a second source terminal (s2) of the second semiconductor switching element (Q2) is connected to a fourth source terminal (s4) of the fourth semiconductor switching element (Q4),
a connection line connecting the first drain terminal (d1) and the third drain terminal (d3) is connected to a positive electrode of the direct current power supply (10),
a connection line connecting the second source terminal (s2) and the fourth source terminal (s4) is connected to a negative electrode of the direct current power supply (10),
a connection line connecting the first source terminal (s1) and the second drain terminal (d2) is connected to one end of the primary winding (TR1),
a connection line connecting the third source terminal (s3) and the fourth drain terminal (d4) is connected to the other end of the primary winding (TR1), and
in a case where the current value detected by the current detection unit (50) is equal to or smaller than the reference current value when switching OFF the fourth semiconductor switching element (Q4) and switching ON the third semiconductor switching element (Q3) as the subject of the soft switching control from a state where the second semiconductor switching element (Q2) and the fourth semiconductor switching element (Q4) are ON and the first semiconductor switching element (Q1) and the third semiconductor switching element (Q3) are OFF, the controller switches OFF the fourth semiconductor switching element (Q4), allows the current flowing backward due to resonance of the coil (L) and the capacitor (C) to flow in the secondary winding (TR2) via the rectifier circuit and allows the current flowing in the secondary winding (TR2) to flow in the primary winding (TR1) to increase a voltage of the third source terminal (s3) of the third semiconductor switching element (Q3) as the subject of the soft switching control, and adjusts a potential difference between the third drain terminal (d3) and the third source terminal (s3) to be equal to or smaller than the set potential difference so as to switch the third semiconductor switching element (Q3) as the subject of the soft switching control from OFF to ON.
